# EUROPEAN PATENT SPECIFICATION

(11) **EP 3 700 995 B1**
(45) Date of publication and mention of the grant of the patent: **18.03.2026**
(21) Application number: 17798097.6
(22) Date of filing: 27.10.2017
(51) Int. Cl.: C09J 7/38, C09J 7/21, E04F 19/06

(54) **FRIEZE TAPE**
FRIESBAND
BANDE FRISE

(43) Date of publication of application: 02.09.2020
(73) Proprietor: Knauf Gips KG, 97346 Iphofen (DE); 3D COATINGS GmbH & Co. KG, 97234 Reichenberg (DE)
(72) Inventor: SCHÄFER, Matthias, 97244 Bütthard (DE); PHILIPP, Gottfried, 97270 Kist (DE); MARQUARDT, Andreas, 97261 Güntersleben (DE)
(74) Representative: Gleim Petri Patent- und Rechtsanwaltspartnerschaft mbB
(86) International application number: PCT/EP2017/001262
(87) International publication number: WO 2019/080986

(56) References cited:
- WO-A1-2015/197113
- WO-A1-2017/029146
- DE-A1- 102013 214 316
- DE-U1- 202005 005 208
- DE-U1- 202005 005 208

## Description

The invention relates to a frieze tape, especially for attachment to a ceiling or a wall, in particular to an acoustic ceiling made of perforated building panels, and a method for providing a building panel with a frieze section.

In the technical field of interior constructions for buildings, it is known to apply perforated building panels (e.g. perforated gypsum plasterboards, perforated boards made of other materials as for example ply wood), specifically in the construction of acoustic ceilings.

It is known to provide a frieze section, in particular as plain border or perimeter at acoustic ceilings by installing prefabricated building panels which have no perforations in a selected area that forms the frieze section in the mounted state. This is disadvantageous as those constructions require intensive pre-planning as the different perforated building panels have to be arranged fittingly. Moreover, it requires high working precision to install a continuous edge of the frieze section which extends over the entire ceiling surface. That makes the installation time consuming on site. Conventionally, the application of frieze tape is known to allow for providing non-perforated plain borders and perimeters as frieze sections at selected areas of the acoustic paneling. The preparation of those selected non-perforated areas starts with sanding of the selected area and wiping the sanded area with a damp dish or sponge to remove the dust and debris from the sanding step. Liquid glue is applied to the selected area by a roller and a frieze tape is attached such that the perforations in the selected area are completely covered. Thereafter, the liquid glue can be applied to the attached frieze tape to provide a surface which can be painted to finish the surface.

Further state of the art is given by the WO 2015/197113 A1, WO 2017/029146 A1 and DE 20 2005 005 2080 U1.

A disadvantage related to this technique is that the frieze tape is applied by use of a liquid glue. The application of liquid glue is time consuming because two separate steps have to be performed. In particular, after the first application, the first glue layer needs to dry and cure completely. In general, the application of liquid glue is unclean and requires preparation for example by the covering of the floor at the construction site.

The object of the invention is therefore to provide a frieze tape which overcomes or at least reduces the disadvantages known from the prior art and in particular a frieze tape which can be installed quickly and which can be applied without the use of additional, especially liquid adhesives.

The problem is solved by a frieze tape for attachment to a ceiling according to the independent claim. Preferred technical aspects form the subject matter of the respective dependent claims.

The invention comprises a frieze tape for attachment to a ceiling or a wall. The frieze tape comprises a layer of permeable non-woven material and an adhesive layer attached to the permeable non-woven material or fleece. The adhesive layer is applied to one side of the non-woven material in a pattern comprising sections without adhesive applied thereto. The adhesive layer comprises a regular pattern of glue dots, wherein the regular pattern comprises 100 to 6400 glue dots per 625 mm². The frieze tape has a thickness of 15 to 80 µm, wherein the layer of permeable non-woven material comprises a non-woven material of 100 weight-% of glass-, mineral-, carbon- or synthetic fibers. The non-woven material is a (sheet-like) web of entangled fibers bonded together which is permeable for the penetration of fluids. The adhesive layer comprises an adhesive capable of adhering to the frieze tape and of bonding with the outer surface of building panels in order to attach the frieze tape to the ceiling or the wall. The pattern with sections without adhesive allows for the penetration of paint through the permeable non-woven material to form a contact with the building panel. Hence additional bonding for the frieze tape to the ceiling is provided by the paint which is painted on the applied adhesive frieze tape after installation. This frieze tape can be installed quickly by only attaching the frieze tape to the building panels. Since no individual step of applying an (liquid) adhesive is required, the frieze tape can be applied cleanly and no pre-arrangements, like covering the floor, are required before the installation. Its thickness allows providing a frieze tape which can be applied without visible edge. The material provides sufficient dimensional stability over a long period of time in order to avoid cracks at the edge of the installed frieze tape. Further, these materials ensure low shrinking of the tape from the wet to the dry state.

According to a preferred technical aspect of the invention, the adhesive layer is a self-adhesive layer. Such a self-adhesive layer comprises an adhesive which forms a bond between the non-woven material and the building panel by pressing the frieze tape against the building panel. The self-adhesive is chosen so as to be capable of adhering to the non-woven material and of bonding it with sufficient strength to the surface of the building panel.

Another technically preferred aspect relates to the adhesive layer which has a weight in the range of 3 to 60 g/m². This range for the weight (per area) of the adhesive layer allows for providing an adhesive layer with enough adhesive material to achieve a sufficient bonding strength to attach the frieze tape at the surface of the building panel. The upper limit is chosen according to the requirement of a limited overall thickness of the frieze tape which prevents the occurrence of visible edges at the border of the installed frieze tape. The edge between frieze tape and regular board surface shall be optically unobtrusive. However, if such an unobtrusive appearance is not required, a higher grammage is suitable as well.

According to a preferred aspect each glue dot has an identical size, preferable having a diameter in the range between 0.1 to 4.0 mm. This diameter size ensures that at the same time a sufficient adherence to the non-woven material and the building board is achieved. At the same time the contours of the individual glue dots are preferably not visible through the attached frieze tape.

The adhesive layer further comprises a regular pattern comprising glue stripes or as irregular pattern comprising glue stripes. Pattern which comprise stripes whether they are regular or irregular allow for the penetration of paint because of they provide sections without applied adhesive. In principle, the stripe pattern can be combined with the dot pattern.

According to another preferred aspect, the adhesive layer comprises a polymer material.

Another advantageous aspect relates to the polymer material comprising at least one of the group of acrylates and rubber. The rubber is preferably a synthetic rubber. However, UV-curing acrylates result in an especially good light constancy/resistance.

It is particularly preferred that the adhesive layer comprises a hot melt adhesive (e.g. synthetic rubber, UV-curing acrylates), a dried dispersion-based adhesive (e.g. acrylic adhesives) or a dried solvent-based adhesive (e.g. acrylic adhesives).

Preferably, the layer of the permeable non-woven material has a grammage in the range of 10 to 70 g/m². The grammage of the non-woven material is chosen so that if a paint is applied at the construction site with a standard roller the edge of the applied frieze tape appears virtually invisible for a viewer in a room after the application of the paint.

Preferably, the layer of permeable non-woven material has a thickness of 8 to 40 µm. The thickness of the non-woven material is chosen in view of the same requirements considered for the grammage.

Particularly advantageous is if the layer of permeable non-woven material has an air permeability of 1000 to 15000 l/(m²s). This range for the air permeability provides a non-woven material which can be penetrated by liquid paint applied to the frieze tape to get in contact with the surface of the building board in a manner to provide for sufficient adherence.

Another technically preferred aspect relates to that the adhesive frieze tape has a grammage of 15 - 100 g/m². The grammage range is chosen so that the edge of the applied frieze tape is not visible for a viewer in a room, especially when painted over.

Advantageously, the air permeability of the frieze tape is 2000 to 7000 l/(m²s). The combined air permeability comprises the air permeability of the adhesive layer and the non-woven material and allows for the sufficient penetration of paint.

Preferably, the adhesive frieze tape has a width of 3 cm to 30 cm. This range allows for providing non-perforated plain borders and perimeters as frieze sections, preferably for acoustic ceilings.

Another aspect of the invention relates to a method for providing a surface of building panels with a frieze section. The method comprises the steps of:
- providing a surface of (e.g. perforated) building panels; (and thereafter)
- applying a frieze tape, preferably an self-adhesive frieze tape (as described above), to selected areas of the surface of building panels; (and thereafter)
- applying a paint covering at least the edge of the frieze tape and the adjacent building panels comprising the frieze tape; and (thereafter)
- optionally sanding the edge area of the adhesive frieze tape.

In the following the invention will be explained in more detail with reference to drawings. Like reference numerals denote similar features throughout the drawings.

The drawings show:
- Fig. 1: top view of a section of a frieze tape for attachment to a ceiling according to the invention;
- Fig. 2: side view of the frieze tape shown in Fig. 1; and
- Fig. 3: perspective view of a ceiling having a frieze tape applied thereto forming a perimeter.

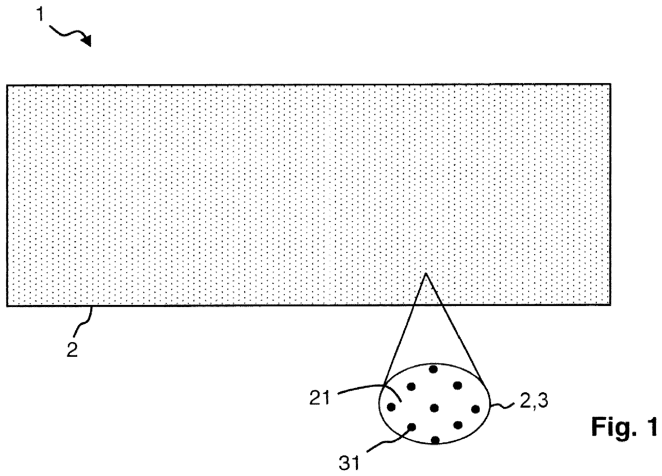

In **Fig. 1** a section of a frieze tape 1 for attachment to a (acoustic) ceiling is illustrated. Such a section for example can be cut from a roll in which frieze tape 1 is available in the market. Frieze tape 1 comprises a layer of permeable non-woven material 2 and an adhesive layer 3 attached to the non-woven material 2.

The application of the illustrated frieze tape 1 to a layer of building boards requires no liquid adhesive during the installation so that the application is clean and no pre- arrangements, like covering the floor, are required before the installation.

In the shown example, the non-woven material comprises synthetic fibers which provide dimensional stability. The grammage of the non-woven is in the illustrated example in the range of 10 to 70 g/m². The permeable non-woven material 2 has a thickness of 8 to 40 µm while providing an air permeability in the range of 1000 to 15000 l/(m²s).

The adhesive layer 3 is arranged at one side of the non-woven material 2 in a regular pattern of glue dots 31. In the illustrated example, the adhesive layer 3 has a weight of 3 to 60 g/m². The pattern comprises glue dots 31, preferably of an identical size, which are arranged in an amount in the range of 100 to 6400 glue dots per 625 mm². The adhesive may be a hot melt adhesive made of an UV-light curable acrylic polymer material.

The circular area 2 shows an enlarged section of the frieze tape 1 in the top view. It illustrates areas 21 without adhesive applied thereto and glue dots 31.

In a particular example, the frieze 1 tape as shown in **Fig. 1** is made of a non-woven material 2 "Vlies VILEDON T 1790C" available in the market from Freudenberg Vliesstoffe/Weinheim consisting of 100% glass fiber, 30 g/m2 weight/area and an air permeability of about 8.000 l/(m² x s) (measured with AKUSTRON from rycobel group ib-walther/Uffenheim).

An adhesive layer 3 is applied to the exemplified non-woven material 2, the adhesive layer 3 having a weight/area in the range of 2.0 to 2.5 g/m2 and is a hot melt adhesive e.g"Technomelt 8783" from Henkel/Dusseldorf. The adhesive layer 3 is applied with a 20 dpi-pattern of glue dots 31 so that the air permeability of the adhesive layer 3 is about 6.000 l/(m2 s) determined by the above mentioned AKUSTRON device. The frieze tape 1 has in this specific example a width of 100 mm.

The adhesive layer 3 can be covered and protected by the silicone layer of a one side siliconized paper (not shown), e.g. RB065/2 from Cotek Papers Ltd/Draycott, Great Britain, in order to allow for rolling up of the frieze tape. The protective siliconized paper has to be removed before applying the frieze tape to a ceiling or a wall.

The particular combination of non-woven material 2 and adhesive layer 3 that is shown in **Fig. 1** is preferred, but generally the non-woven material 2 and the adhesive layer 3 can be combined without restriction within the above mentioned ranges.

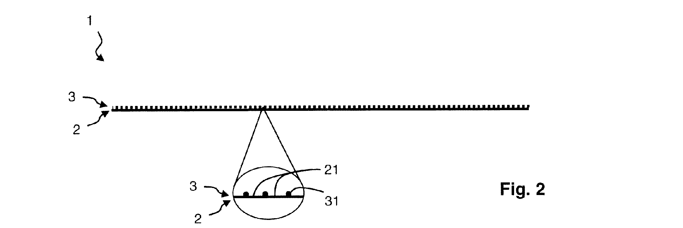

In **Fig. 2** a side view of a section of the frieze tape 1 for attachment to a ceiling or a wall is illustrated. In the side view, as well, can be seen that the frieze tape 1 comprises a layer of permeable non-woven material 2 and an adhesive layer 3 attached to the non- woven material 2. In the circle 2 below, an enlarged section of the frieze tape 1 is illustrated in the side view which gives a detailed illustration of the thickness of the adhesive frieze tape 1 which can be in the range of 15 to 80 µm and the thickness of the permeable non-woven material 2 which is in the range of 8 to 40 µm.

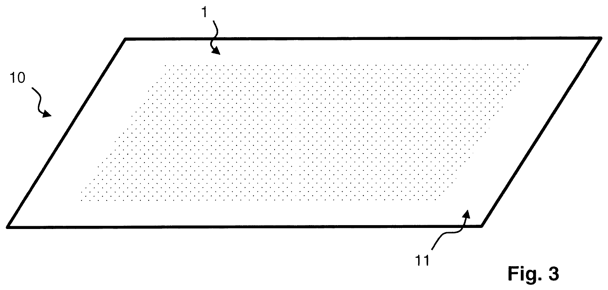

In **Fig. 3****,** the frieze tape 1 explained in connection with the foregoing figures is attached to an acoustic ceiling having a frieze section 1 1 extending along its perimeter.

The ceiling is installed by the method described herein which starts with providing a (plurality of) perforated building panel (s) 10 to form the ceiling surface.

Thereafter, adhesive frieze tape 1 is applied in selected areas for selectively covering areas of perforations of the building panels 10. The selected areas constitute the frieze section 11. The areas as shown in Fig. 3 may form a frame around the ceiling. However, it is also possible to arrange covered areas within the ceiling surface for merely optic purposes, for example creating a certain design.

Thereafter paint is applied to the attached frieze tape 1 and at least part of the ceiling surface (uncovered building boards) to firmly attach the frieze tape 1 to the building boards and to obscure the edge of the tape. Finally the edge (area) of the frieze tape 1 can be sanded.

In a specific example, the frieze tape is attached to an acoustic ceiling made of plasterboards which are available in the market as CLEANEO CLASSIC 8/18R (Knauf Gips KG/lphofen).

The applied frieze tape is covered by the paint KNAUF INTOL (Knauf Gips KG/lphofen).

## Claims

1. Frieze tape (1) for attachment to a ceiling or a wall, the frieze tape (1) comprising a layer of permeable non-woven material (2) and an adhesive layer (3) attached to the permeable non-woven material (2), the adhesive layer (3) being applied to one side of the non-woven material in a pattern comprising sections (21) without adhesive applied thereto, wherein the adhesive layer (3) comprises a regular pattern of glue dots (31), wherein the regular pattern comprises 100 to 6400 glue dots per 625 mm², wherein the frieze tape (1) has a thickness of 15 to 80 µm, wherein the layer of permeable non-woven material (2) comprises a non-woven material of 100 weight-% of glass-, mineral-, carbon- or synthetic fibers.

2. Frieze tape (1) according to claim 1, wherein the adhesive layer (3) is a self-adhesive layer.

3. Frieze tape (1) according to claim 1 or 2, wherein the adhesive layer (3) has a weight in the range of 3 to 60 g/m².

4. Frieze tape (1) according to claim 1, wherein each glue dot (31) has an identical size of a diameter in the range between 0.1 to 4.0 mm.

5. Frieze tape (1) according to any one of the proceeding claims, wherein the adhesive layer (3) further comprises a regular pattern of glue stripes or an irregular pattern of glue stripes .

6. Frieze tape (1) according to any one of the proceeding claims, wherein the adhesive layer (3) comprises a polymer material, and wherein the polymer material comprises at least one of the group of acrylates and rubber.

7. Frieze tape (1) according to claim 5 or 6, wherein the adhesive layer (3) comprises a hot melt adhesive, a dispersion-based adhesive or a solvent-based adhesive.

8. Frieze tape (1) according to any one of the proceeding claims, wherein the layer of permeable non-woven material (2) has a thickness of 8 to 40 µm and/or grammage in the range of 10 to 70 g/m².

9. Frieze tape (1) according to any one of the proceeding claims, wherein the adhesive frieze tape has a grammage of 15 to 100 g/m².

10. Frieze tape (1) according to any one of the proceeding claims, wherein the air permeability of adhesive frieze tape is 2000 to 7000 l/(m²s).

11. Frieze tape (1) according to any one of the proceeding claims, wherein the frieze tape has a width of 3 cm to 30 cm.

12. Method for providing a surface of building panels (10) with a frieze section (11) comprising the steps of:
- providing building panels (10) having a surface:
- applying a frieze tape (1) according to any one of the preceding claims to selected areas of the surface of building panels (10);
- applying a paint covering at least the edge of the frieze tape and the adjacent building panels (10) comprising the frieze tape (1); and
- optionally sanding the edge area of the frieze tape.

## Patentansprüche

1. Fries-Tape (1) zur Befestigung an einer Decke oder einer Wand, wobei das Fries-Tape (1) eine Schicht aus durchlässigem Vliesmaterial (2) und eine an dem durchlässigen Vliesmaterial (2) angebrachte Haftvermittlerschicht (3) umfasst, wobei die Haftvermittlerschicht (3) auf einer Seite des Vliesmaterials in einem Muster aufgebracht ist, das Abschnitte (21) ohne Haftvermittlerauftrag umfasst, wobei die Haftvermittlerschicht (3) ein regelmäßiges Muster aus Klebepunkten (31) umfasst, wobei das regelmäßige Muster 100 bis 6400 Klebepunkte pro 625 mm² umfasst, wobei das Fries-Tape (1) eine Dicke von 15 µm bis 80 µm aufweist, wobei die Schicht aus durchlässigem Vliesmaterial (2) ein Vliesmaterial aus 100 Gew.-% Glas-, Mineral-, Kohlenstoff- oder Synthetikfasern umfasst.

2. Fries-Tape (1) nach Anspruch 1, wobei die Haftermittlerschicht (3) eine selbstadhäsive Schicht ist.

3. Fries-Tape (1) nach Anspruch 1 oder 2, wobei die Haftvermittlerschicht (3) ein Gewicht in einem Bereich von 3 g/m² bis 60 g/m² aufweist.

4. Fries-Tape (1) nach Anspruch 1, wobei jeder Klebepunkt (31) eine identische Größe mit einem Durchmesser in einem Bereich zwischen 0,1 mm bis 4,0 mm aufweist.

5. Fries-Tape (1) nach einem der vorstehenden Ansprüche, wobei die Haftermittlerschicht (3) ferner ein regelmäßiges Muster aus Klebestreifen oder ein unregelmäßiges Muster aus Klebestreifen aufweist.

6. Fries-Tape (1) nach einem der vorstehenden Ansprüche, wobei die Haftvermittlerschicht (3) ein Polymermaterial enthält, und wobei das Polymermaterial mindestens eines aus der Gruppe von Acrylaten und Kautschuk enthält.

7. Fries-Tape (1) nach Anspruch 5 oder 6, wobei die Haftvermittlerschicht (3) einen Heißschmelz-Haftvermittler, einen dispersionsbasierten Haftvermittler oder einen lösungsmittelbasierten Haftvermittler enthält.

8. Fries-Tape (1) nach einem der vorstehenden Ansprüche, wobei die Schicht aus durchlässigem Vliesmaterial (2) eine Dicke von 8 µm bis 40 µm und/oder eine Grammatur in einem Bereich von 10 g/m² bis 70 g/m² aufweist.

9. Fries-Tape (1) nach einem der vorstehenden Ansprüche, wobei das adhäsive Fries-Tape eine Grammatur von 15 g/m² bis 100 g/m² aufweist.

10. Fries-Tape (1) nach einem der vorstehenden Ansprüche, wobei die Luftdurchlässigkeit des adhäsiven Fries-Tapes 2000 l/(m²s) bis 7000 l/(m²s) beträgt.

11. Fries-Tape (1) nach einem der vorstehenden Ansprüche, wobei das Fries-Tape eine Breite von 3 cm bis 30 cm aufweist.

12. Verfahren zum Ausstatten einer Oberfläche von Bauplatten (10) mit einem Friesabschnitt (11), umfassend die folgenden Schritte:
- Bereitstellen von Bauplatten (10), welche eine Oberfläche aufweisen;
- Aufbringen eines Fries-Tapes (1) nach einem der vorstehenden Ansprüche auf ausgewählte Bereiche der Oberfläche der Bauplatten (10);
- Auftragen eines Anstrichmittels, das zumindest den Rand des Fries-Tapes und die angrenzenden Bauplatten (10), welche das Fries-Tape (1) aufweisen, bedeckt; und
- Optionales Abschleifen des Randbereichs des Fries-Tapes.

## Revendications

1. Ruban à frise (1) destinée à être fixée à un plafond ou à un mur, le ruban à frise (1) comprenant une couche de matériau non tissé perméable (2) et une couche adhésive (3) fixée sur le matériau non tissé perméable (2), la couche adhésive (3) étant appliquée sur un côté du matériau non tissé selon un motif comprenant des sections (21) sans application d'agent adhésif sur celles-ci, la couche adhésive (3) comprenant un motif régulier de points de colle (31), le motif régulier comprenant 100 à 6400 points de colle par 625 mm², le ruban à frise (1) ayant une épaisseur de 15 µm à 80 µm, la couche de matériau non tissé perméable (2) comprenant un matériau non tissé composé à 100 % en poids de fibres de verre, minérales, de carbone ou synthétiques.

2. Ruban à frise (1) selon la revendication 1, la couche adhésive (3) étant une couche auto-adhésive.

3. Ruban à frise (1) selon les revendications 1 ou 2, la couche adhésive (3) ayant un poids compris dans une plage entre 3 g/m² et 60 g/m².

4. Ruban à frise (1) selon la revendication 1, chaque point de colle (31) ayant une taille identique avec un diamètre compris dans une plage entre 0,1 mm et 4,0 mm.

5. Ruban à frise (1) selon l'une des revendications précédentes, la couche adhésive (3) présentant en outre un motif régulier de bandes de colle ou un motif irrégulier de bandes de colle.

6. Ruban à frise (1) selon l'une des revendications précédentes, la couche adhésive (3) comprenant un matériau polymère, et le matériau polymère comprenant au moins un élément du groupe des acrylates et du caoutchouc.

7. Ruban à frise (1) selon les revendications 5 ou 6, la couche adhésive (3) comprenant un agent adhésif thermofusible, un agent adhésif à base de dispersion ou un agent adhésif à base de solvant.

8. Ruban à frise (1) selon l'une des revendications précédentes, la couche de matériau non tissé perméable (2) ayant une épaisseur de 8 µm à 40 µm et/ou un grammage compris dans une plage entre 10 g/m² et 70 g/m².

9. Ruban à frise (1) selon l'une des revendications précédentes, le ruban à frise adhésif ayant un grammage de 15 g/m² à 100 g/m².

10. Ruban à frise (1) selon l'une des revendications précédentes, la perméabilité à l'air du ruban à frise adhésif étant de 2000 l/(m²s) à 7000 l/(m²s).

11. Ruban à frise (1) selon l'une des revendications précédentes, dans le ruban à frise ayant une largeur comprise entre 3 cm et 30 cm.

12. Procédé pour équiper une surface de panneaux de construction (10) d'une section à frise (11), comprenant les étapes suivantes :
- fourniture de panneaux de construction (10) avec une surface ;
- application d'un ruban à frise (1) selon l'une des revendications précédentes sur des zones sélectionnées de la surface des panneaux de construction (10) ;
- application d'une peinture qui recouvre au moins le bord du ruban à frise et les panneaux de construction (10) adjacents qui comportent le ruban à frise (1) ; et
- sablage facultatif de la zone de bord du ruban à frise.
